(19) Europäisches Patentamt
European Patent Office
Office européen des brevets

(11) Publication number: 0 196 588 A2

(12) EUROPEAN PATENT APPLICATION

(21) Application number: 86103995.6

(51) Int. Cl.[4]: C 08 F 26/02

(22) Date of filing: 24.03.86

(30) Priority: 29.03.85 JP 65150/85

(43) Date of publication of application: 08.10.86 Bulletin 86/41

(84) Designated Contracting States: BE CH DE FR GB LI

(71) Applicant: NITTO BOSEKI CO., LTD.
1 Aza Higashi Gonome
Fukushima-shi Fukushima-ken(JP)

(72) Inventor: Ueda, Toshio
17-19, Saikon-2-chome
Koriyama-shi(JP)

(72) Inventor: Kageno, Kenji
81-1, Aza Atago Kubota
Fukuyamamachi Koriyama-shi(JP)

(72) Inventor: Hasegawa, Sakuro
4608, Oba
Fujisawa-shi(JP)

(72) Inventor: Shimizu, Kiyoshi
20-10, Aza Sakaida Fukuhara
Fukuyamamachi Koriyama-shi(JP)

(72) Inventor: Harada, Susumu
9-4, Koenjiminami-5-chome
Suginami-ku Tokyo(JP)

(74) Representative: Eitle, Werner, Dipl.-Ing. et al,
Hoffmann, Eitle & Partner Patentanwälte Arabellastrasse 4
D-8000 München 81(DE)

(54) **Process for the preparation of copolymers of N-substituted secondary monoallylamines or salts thereof.**

(57) A water-soluble radical initiator containing an azo group in the molecule is used as polymerization initiator in a polar solvent for enabling efficient copolymerization of N-substituted secondary monoallylamines, which have been considered hard to polymerize, with other monomers.

EP 0 196 588 A2

# PROCESS FOR THE PREPARATION OF COPOLYMERS OF N-SUBSTITUTED SECONDARY MONOALLYLAMINES OR SALTS THEREOF

## BACKGROUND OF THE INVENTION

The present invention relates to a process for preparing copolymers of N-substituted secondary monoallylamines or salts thereof.

As is well known, monoallyl compounds are hard to polymerize with an ordinary radical initiator, and usually only polymers with a low degree of polymerization can be produced in a low yield from such compounds. This is attributed to the occurrence of a self-termination due to the reaction between the allylic hydrogen atom and the radical, and this typical reaction is generally called allylic degradative chain transfer.

This equally applies to N-substituted secondary monoallylamines which belong to a class of monoallyl compounds, and the preparation of polymers or copolymers of N-substituted secondary monoallylamines has been considered very difficult.

It is expected, however, that the polyamines obtained by copolymerizing N-substituted secondary monoallylamines with other monomers will be of great industrial utility and possessed of various useful properties, so that the development of the techniques for copolymerizing N-substituted secondary monoallylamines with other monomers has been desired.

SUMMARY OF THE INVENTION

As a result of extensive studies for enabling copolymerization of N-substituted secondary monoallylamines with other monomers, which has been considered difficult with the prior art, the present inventors found that when a water-soluble radical initiator having an azo group in the molecule is used as polymerization initiator in a polar solvent, a salt of N-substituted secondary monoallylamine having the general formula:

$$CH_2{=}CH{-}CH_2{-}N^+H_2RX^- \qquad (I)$$

(wherein R represents a hydrocarbon group or substituted hydrocarbon group having 1-18 carbon atoms, and $X^-$ represents a monovalent anionic group) are readily polymerized with a salt of monoallylamine having the general formula:

$$CH_2{=}CH{-}CH_2{-}N^+H_3X^- \qquad (II)$$

(wherein $X^-$ represents a monovalent anionic group) and/or a salt of diallylamine or its derivative having the general formula:

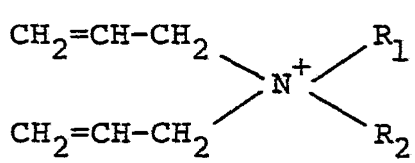 ... $X^-$ (III)

(wherein $R_1$ and $R_2$ each represents hydrogen or a hydrocarbon group or substituted hydrocarbon group having 1-18 carbon atoms, and $X^-$ represents a monovalent anionic group)

to produce a copolymer of N-substituted secondary monoallylamine or a salt thereof. The present invention was achieved on the basis of such novel finding.

Thus, the present invention provides a process for preparing a copolymer of N-substituted secondary monoallylamine or a salt thereof, characterized in that a salt of N-substituted secondary monoallylamine having the above-shown formula (I) is copolymerized with a salt of monoallylamine having the general formula (II) and/or a salt of diallylamine or its derivative having the general formula (III) in a polar solvent in the presence of a water-soluble radical polymerization initiator containing an azo group in the molecule.

PREFERRED EMBODIMENTS OF THE INVENTION

Typical examples of the salts of N-substituted secondary monoallylamines of the general formula (I) usable in the present invention are: hydrochlorides, nitrates, sulfates, sulfites, phosphates or acetates of N-methylmonoallylamine, N-ethylmonoallylamine, N-n-propylmonoallylamine, N-iso-propylmonoallylamine, N-n-butylmonoallylamine, N-sec-butylmonoallylamine, N-tert-butylmonoallylamine, N-iso-butylmonoallylamine, N-amylmonoallylamine, N-hexylmonoallylamine, N-octylmonoallylamine, N-cyclohexylmonoallylamine, N-benzylmonoallylamine, N-2-hydroxyethylmonoallylamine, N-2-hydroxypropylmonoallylamine, N-2-aminoethylmonoallylamine, N,N-dimethyl-N'-allylpropanediamine or N-allyltris(hydroxymethyl)aminomethane.

The comonomers to be copolymerized with said salts of N-substituted secondary monoallylamines in the process of this invention are the salts of monoallylamines of general formula (II) and/or the salts of diallylamines or derivatives thereof of general formula (III).

The salts of monoallylamines of general formula (II) include hydrochloride, nitrate, sulfate, sulfite, phosphate and acetate.

Examples of the salts of diallylamines or derivatives thereof of general formula (III) are as follows:

(i) Hydrochlorides, nitrates, sulfates, sulfites, phosphates or carboxylates of diallylamine, N-methyldiallylamine, N-ethyldiallylamine, N-propyldiallylamine, N-butyldiallylamine, N-amyldiallylamine, N-hexyldiallylamine, N-octyldiallylamine, N-lauryldiallylamine, N-benzyldiallylamine, N-hydroxyethyldiallylamine, or N-cyclohexyldiallylamine.

(ii) Dimethyldiallylammonium chloride, methylethyldiallylammonium chloride, methylpropyldiallylammonium chloride, methylbutyldiallylammonium chloride, methylhexyldiallylammonium chloride, methyllauryldiallylammonium chloride, methylbenzyldiallylammonium chloride, methyllaurylbenzylammonium chloride, methylhydroxyethylammonium chloride, diethyldiallylammonium chloride, and dihydroxyethyldiallylammonium chloride.

The polymerization is carried out in a polar solvent, the examples thereof being water, inorganic acids or aqueous solution thereof, organic acids or aqueous

solution thereof, alcohols, dimethyl sulfoxide, dimethylforamide, formamide, and aqueous solution of salts of inorganic acids (such as zinc chloride, calcium chloride, magnesium chloride, etc.).

Among said salts of N-substituted secondary monoallylamines, salts of monoallylamines and salts of diallylamines or derivatives thereof, those of the secondary or tertiary amine type are usually used in the form of isolated crystal for carrying out the polymerization, but a salt may be formed in the reaction system (in situ) by adding an amine and an acid in said polar solvent and such salt may be used for the polymerization.

As the water-soluble radical initiator containing an azo group used in this invention, it is preferred to use an azo compound of the general formula:

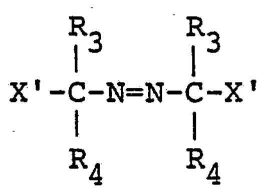 or

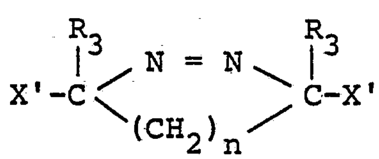

(wherein n is a number of 1 to 2; $R_3$ and $R_4$ may be the same or different groups and represent hydrogen or a hydrocarbon group or substituted hydrocarbon group having 1-10 carbon atoms, and they may form a ring; and X' represents

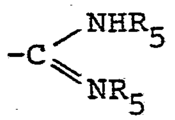 · HY (wherein $R_5$ represents hydrogen or a hydrocarbon group or substituted hydrocarbon group having 1-8 carbon atoms, and HY represents an inorganic acid or an organic acid), 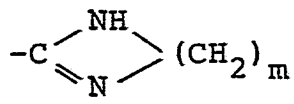 · HY (m = 2-3), 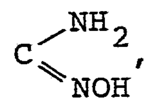, $CONHNH_2$ or 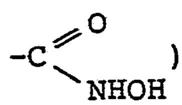).

Typical examples of the azo type polymerization initiators usable in this invention are listed below:

(1) 2,2'-azobis(2-amidinopropane) dihydrochloride, 2,2'-azobis(2-amidinobutane) dihydrochloride, 2,2'-azobis(amidinopentane) dihydrochloride, 2,2'-azobis(2-amidinohexane) dihydrochloride, 2,2'-azobis(2-amidino-4-methyl-4-methoxypentane) dihydrochloride, 1,1'-azobis(1-amidinocyclohexane) dihydrochloride, 2,2'-azobis(2-amidino-3-methylbutane) dihydrochloride, 2,2'-azobis(2-amidino-3,3'-dimethylbutane) dihydrochloride, 2,2'-azobis(2-amidino-4-methylpentane) dihydrochloride, 2,2'-azobis(2-amidino-4,4-dimethylpentane) dihydrochloride, 2,2'-azobis(2-amidino-3-phenylpropane) dihydrochloride;

(2) 2,2'-azobis(2-(N-phenylamino)propane) dihydrochloride, 2,2'-azobis(2-(N-phenylamino)butane) dihydrochloride, 2,2'-azobis(2-(N-methylamidino)propane) dihydrochloride, 2,2'-azobis(2-(N-ethylamidino)propane) dihydrochloride, 2,2'-azobis(2-(N-propylamidino)propane) dihydrochloride, 2,2'-azobis(2-(N-butylamino)propane) dihydrochloride, 2,2'-azobis(2-(N-cyclohexylamidino)propane)

dihydrochloride, 2,2'-azobis(2-(N-hydroxyethylamino)propane) dihydrochloride, 2,2'-azobis(2-(N-dimethylaminopropylamino)propane) tetrahydrochloride, 2,2'-azobis(2-(N,N-dimethylamidino)propane) dihydrochloride, 2,2'-azobis(2-(N,N-diethylamidino)propane) dihydrochloride;

(3) 2,2'-azobis(2-(imidazolinyl)propane) dihydrochloride, 2,2'-azobis(2-(imidazolynyl)butane) dihydrochloride, 2,2'-azobis(2-(3,4,5,6-tetrahydropyrimidinyl)-propane) dihydrochlofide, 2,2'-azobis(2-(3,4,5,6-tetrahydropyrimidinyl)butane) dihydrochloride;

(4) 3,5-diamidinyl-1,2-diazo-1-cyclopentene dihydrochloride, 3-methyl-3,4-diamidinyl-1,2-diazo-1-cyclopentene dihydrochloride, 3-ethyl-3,5-diamidinyl-1,2-diazo-1-cyclopentene dihydrochloride, 3,5-dimethyl-3,5-diamidinyl-1,2-diazo-1-cyclopentene dihydrochloride, 3,6-diamidinyl-1,2-diazo-1-cyclohexene dihydrochloride, 3-phenyl-3,5-diamidinyl-1,2-diazo-1-cyclopentene dihydrochloride, 3,5-diphenyl-3,5-diamidinyl-1,2-diazo-1-cyclopentene dihydrochloride;

(5) 2,2'-azobis(2-methylpropionehydroxamic acid), 2,2'-azobis(2-ethylbutylhydroxamic acid), 2,2'-azobis(2-propylpentylhydroxamic acid), 2,2'-azobis(2-carboxymethylpropionehydroxamic acid), 2,2-azobis(2-carboxyethylpropionehydroxamic acid);

(6) 2,2'-azobis(2-methylpropaneamidoxime), 2,2'-azobis(2-methylbutaneamidoxime), 2,2'-azobis(2-propylpentaneamidoxime), 3,3'-azobis(3-acetamidoximebutyric acid), 4,4'-azobis(4-acetamidoximevaleric acid); and

(7) 2,2'-azobis(2-methylpropionic acid hydrazide),

2,2'-azobis(2-ethylbutyric acid hydrazide), 2,2'-azobis(2-propylbutyric acid hydrazide).

The preparation processes of these azo compounds are disclosed in U.S. Patent Nos. 2,599,299, 2,599,300 and 4,528,347.

In the process of this invention, said radical initiator is used in an amount of 0.1-10% by weight, usually 1-7% by weight, based on the total amount of the salt of N-substituted secondary monoallylamine and the salt of monoallylamine and/or the salt of diallylamine or a derivative thereof.

The polymerization temperature is variable depending on the chemical structure of the initiator used, but it can be in the range of 30-100°C, usually 40-70°C. The polymerization time is usually within 200 hours.

As for the concentration of the starting monomers, it is desirable to select the highest concentration within the limits of their solubility, but usually a concentration of 10-85% by weight is used.

Copolymers of N-substituted secondary monoallylamine salts can be produced in the way described above, while copolymers of N-substituted secondary monoallylamines (free bases) can be easily produced from the copolymers of their salts by the known method: copolymer of a salt of N-substituted secondary monoallylamine is dissolved in water or a polar solvent, to which is added a strong base such as sodium hydroxide, calcium hydroxide or the like in an amount equivalent to the amine, and the by-produced

lowmolecular salt (sodium chloride in case of using sodium hydroxide) is removed by a suitable method such as filtration, dialysis, etc., or said copolymer is treated with an OH type strongly basic anion exchange resin.

For further clarifying the present invention, it is described more particularly below by way of the examples thereof, which examples however are merely intended to be illustrative and not limiting the scope of the invention.

Example 1

52.1 g of 35% hydrochloric acid was added to 42.58 g (0.5 mol) of N-ethylallylamine under cooling to obtain a 64.2% aqueous solution of N-ethylallylamine hydrochloride (hereinafter abbreviated as EAA·HCl). Separately, 52.1 g of 35% HCl was added to 28.54 g (0.5 mol) of monoallylamine under cooling, and after neutralization, the mixture was concentrated by a rotary evaporator to obtain a 69.8% aqueous solution of monoallylamine hydrochloride (hereinafter abbreviated as AA·HCl). Then 18.94 g of said aqueous solution of EAA·HCl and 13.40 g of said aqueous solution of AA·HCl were mixed and heated to 60°C, followed by the addition thereto of 0.645 g of 2,2'-azobis(2-amidinopropane) dihydrochloride (hereinafter referred to as "initiator I"), the mixture being maintained at the same temperature for 48 hours. The viscosity of the solution increased gradually to form a viscous solution. When this solution was added to a large quantity of acetone, a white precipitate of copolymer was formed. The precipitate was

filtered out and dried in vacuo at 50°C to obtain 18.79 g of white powder (conversion being 87.3%). The infrared absorption spectrum of this product showed disappearance of absorption based on allylic double bonds at 930, 990 and 1,410 $cm^{-1}$. Intrinsic viscosity of the product (as measured in 1/10M NaCl at 30°C) was 0.19.

Polymers of monoallylamine hydrochloride are insoluble in methanol, while polymers of N-ethylallylamine hydrochloride are soluble in methabol, but the copolymer obtained here is soluble in methanol.

When the same experiment as described above was conducted by replacing initiator 1 with the same molar amount of ammonium persulfate and tert-butyl hydroperoxide respectively, there was observed no formation of copolymer in both cases. Also, no copolymer was produced when said experiment was conducted by replacing the solvent of the polymerization system with methanol and initiator 1 with the same molar amount of azobisisobutyronitrile and cumene peroxide respectively.

Examples 2-9

The same operations as in Example 1 were carried out by using initiator 1 and monoallylamine hydrochloride but by replacing N-ethylallylamine with N-methylallylamine (hereinafter abbreviated as MAA), N-n-propylallylamine (n-PAA), N-iso-propylallylamine (i-PAA), N-n-butylallylamine (n-BAA), N-iso-butylallylamine (i-BAA), N-sec-butylallylamine (s-BAA), N-tert-butylallylamine (t-BAA) and

N-cyclohexylallylamine (CHA) respectively. The polymerization conditions, conversion and intrinsic viscosity of the obtained polymers are shown collectively in Table 1. The copolymers obtained here were all soluble in methanol.

Table 1

| Example No. | Monomers (molar ratio) | Monomer concentration | Amount of initiator used (ratio to monomers) | Polymerization temp. | Polymerization time | Conversion | Intrinsic viscosity |
|---|---|---|---|---|---|---|---|
| 2 | MAA·HCl/AA·HCl (1:1) | 65.0% | 3% by weight | 60°C | 48 hours | 78.8 | 0.15 |
| 3 | n-PAA·HCl/ " ( " ) | 67.9 | " | " | " | 82.4 | 0.18 |
| 4 | i-PAA·HCl/ " ( " ) | " | " | " | " | 98.1 | 0.23 |
| 5 | n-BAA·HCl/ " ( " ) | 69.2 | " | " | " | 77.3 | 0.19 |
| 6 | i-BAA·HCl/ " ( " ) | " | " | " | " | 73.7 | 0.19 |
| 7 | s-BAA·HCl/ " ( " ) | " | " | " | " | 92.0 | 0.26 |
| 8 | t-BAA·HCl/ " ( " ) | 66.7 | " | " | " | 90.5 | 0.25 |
| 9 | CHA·HCl/ " ( " ) | 66.6 | " | " | " | 92.4 | 0.26 |

Example 10

52,1 g of 35% hydrochloric acid was added to 49.6 g (0.5 mol) of N-iso-propylallylamine (i-PAA) under cooling to obtain a 66.7% aqueous solution of N-iso-propylallylamine hydrochloride (i-PAA·HCl). Separately, 52.1 g of 35% HCl was added to 48.58 g (0.5 mol) of diallylamine (DAA) under cooling to obtain a 66.4% aqueous solution of diallylamine hydrochloride (DAA·HCl). Then 20.34 g (0.1 mol) of said aqueous solution of i-PAA·HCl and 20.14 g (0.1 mol) of said aqueous solution of DAA·HCl were mixed, and the mixture was heated to 60°C, then added with 0.809 g of 2,2'-azobis(2-amidinopropane) dihydrochloride as polymerization initiator and maintained at the same temperature for 48 hours. The viscosity of the solution increased gradually to form a viscous solution. When this solution was added into a large quantity of acetone, a white precipitate of copolymer was formed. The precipitate was filtered out and dried in vacuo at 50°C to obtain 25.88 g of white powder (conversion being 96.1%). The infrared absorption spectrum of this product showed disappearance of absorption based on allylic double bonds at 930, 990 and 1,410 $cm^{-1}$. Intrinsic viscosity of the product was 0.33.

When the same experiment as described above was conducted by replacing 2,2'-azobis(2-amidinopropane) dihydrochloride with the same amount of ammonium persulfate and tert-butyl hydroperoxide respectively, the conversion was 26.2% and 18.4%, respectively.

1 Examples 11-18

The same operations as in Example 10 were carried out by using 2,2'-azobis(2-amidinopropane) dihydrochloride as polymerization initiator and diallylamine hydrochloride (DAA·HCl) as monomer but by replacing another monomer N-iso-propylallylamine (i-BAA) with N-methylallylamine (MAA), N-ethylallylamine (EAA), N-n-propylallylamine (n-PAA), N-n-butylallylamine (n-BAA), N-iso-butylallylamine (i-BAA), N-sec-butylallylamine (s-BAA), N-tert-butylallylamine (t-BAA) and N-cyclohexylallylamine (CHA) respectively. The polymerization conditions, conversion and intrinsic viscosity of the obtained polymers are shown collectively in Table 2.

Table 2

| Example No. | Monomers (molar ratio) | Monomer concentration | Amount of initiator used (ratio to monomers) | Polymerization temp. | Polymerization time | Conversion | Intrinsic viscosity |
|---|---|---|---|---|---|---|---|
| 11 | MAA·HCl/DAA·HCl (1:1) | 64.1% | 3% by weight | 60°C | 48 hours | 94.4 | 0.30 |
| 12 | EAA·HCl/ " ( " ) | 65.4 | " | " | " | 93.6 | 0.37 |
| 13 | n-PAA·HCl/ " ( " ) | 66.6 | " | " | " | 87.8 | 0.25 |
| 14 | n-BAA·HCl/ " ( " ) | 67.7 | " | " | " | 80.0 | 0.30 |
| 15 | i-BAA·HCl/ " ( " ) | " | " | " | " | 85.6 | 0.29 |
| 16 | s-BAA·HCl/ " ( " ) | " | " | " | " | 87.1 | 0.32 |
| 17 | t-BAA·HCl/ " ( " ) | 65.5 | " | " | " | 96.8 | 0.32 |
| 18 | CHA·HCl/ " ( " ) | 65.6 | " | " | " | 92.9 | 0.40 |

Example 19

52.1 g of 35% hydrochloric acid was added to 56.6 g (0.5 mol) of N-sec-butylallylamine (s-BAA) under cooling to form 108.7 g of a 68.8% aqueous solution of N-sec-butylallylamine hydrochloride (s-BAA·HCl). 13.98 g of water was added to 21.74 g (0.1 mol) of this solution for diluting it, and then 16.17 g of dimethyldiallylammonium chloride (DMDAAmCl) was added and dissolved therein to obtain a solution with a monomer concentration of 60%. This solution was heated to 60°C, then added with 0.934 g of 2,2'-azobis(2-amidinopropane) dihydrochloride as polymerization initiator and maintained at the same temperature for 48 hours. The viscosity of the solution increased gradually to form a viscous solution. When this solution was added into a large quantity of acetone, a white precipitate of copolymer was formed. The precipitate was filtered out and dried in vacuo at 50°C to obtain 31.12 g of white powder (conversion being 100%). The infrared absorption spectrum of this product showed disappearance of absorption based on allylic double bonds at 930, 990 and 1,410 $cm^{-1}$. Intrinsic viscoslity of the product was 0.28.

Examples 20-27

The same operations as in Example 19 were carried out by using 2,2'-azobis(2-amidinopropane) dihydrochloride as polymerization initiator and dimethyldiallylammonium chloride (DMDAAmCl) as monomer but by replacing another

monomer N-sec-butylallylamine (s-BAA) with N-methylallylamine (MAA), N-ethylallylamine (EAA), N-n-propylallylamine (n-PAA), N-iso-propylallylamine (i-PAA), N-n-butylallylamine (n-BAA), N-iso-butylallylamine (i-BAA), N-tert-butylallylamine (t-BAA) and N-cyclohexylallylamine (CHA) respectively. The polymerization conditions, conversion and intrinsic viscosity of the obtained polymers are shown collectively in Table 3.

Table 3

| Example No. | Monomers (molar ratio) | Monomer concentration | Amount of initiator used (ratio to monomers) | Polymerization temp. | Polymerization time | Conversion | Intrinsic viscosity |
|---|---|---|---|---|---|---|---|
| 20 | MAA•HCl/DMDAAmCl (1:1) | 60% | 3% by weight | 60°C | 48 hours | 82.5 | 0.23 |
| 21 | EAA•HCl/ " ( " ) | " | " | " | " | 98.8 | 0.31 |
| 22 | n-PAA•HCl/ " ( " ) | " | " | " | " | 90.6 | 0.45 |
| 23 | i-PAA•HCl/ " ( " ) | " | " | " | " | 100 | 0.33 |
| 24 | n-BAA•HCl/ " ( " ) | " | " | " | " | 86.4 | 0.45 |
| 25 | i-BAA•HCl/ " ( " ) | " | " | " | " | 88.3 | 0.43 |
| 26 | t-BAA•HCl/ " ( " ) | " | " | " | " | 100 | 0.26 |
| 27 | CHA•HCl/ " ( " ) | " | " | " | " | 98.1 | 0.28 |

Examples 28-31

52.1 g of 35% hydrochloric acid was added to 35.57 g (0.5 mol) of N-methylallylamine (MAA) under cooling to obtain a 61.37% aqueous solution of N-methylallylamine hydrochloride (MAA·HCl). Separately, 52.1 g of 35% hydrochloric acid was added to 55.60 g (0.5 mol) of methyldiallylamine (MDAA) under cooling to obtain a 68.55% aqueous solution of N-methyldiallylamine (MDAA·HCl).

Then 17.53 g (0.1 mol) of said aqueous solution of MAA·HCl and 21.54 g (0.1 mol) of said aqueous solution of MDAA·HCl were mixed, and the mixture was heated to 60°C, then added with 0.766 g (3% by weight to monomers) of 2,2'-azobis(2-amidinopropane) dihydrochloride and maintained at the same temperature for 48 hours. The solution increased gradually in viscosity and a viscous solution was obtained. When this solution was added into a large quantity of acetone, a white precipitate of copolymer was formed. The precipitate was filtered out and dried in vacuo at 50°C to obtain white powder.

The same copolymerization operations were conducted by using the monomer combinations of N-ethylallylamine hydrochloride (EAA·HCl) and N-ethyldiallylamine hydrochloride (EDAA·HCl), N-n-propylallylamine hydrochloride (n-PAA·HCl) and N-n-propyldiallylamine (n-PDAA·HCl), and N-n-butylallylamine (n-BAA·HCl) and N-n-butyldiallylamine (n-BDAA). The polymerization conditions, conversion and intrinsic viscosity of the obtained polymers are shown collectively in Table 4.

Table 4

| Example No. | Monomers (molar ratio) | Monomer concentration | Amount of initiator used (ratio to monomers) | Polymerization temp. | Polymerization time | Conversion | Intrinsic viscosity |
|---|---|---|---|---|---|---|---|
| 28 | MAA·HCl/MDAA·HCl (1:1) | 55.3% | 3% by weight | 60°C | 48 hours | 85.4 | 0.24 |
| 29 | EAA·HCl/EDAA·HCl ( " ) | 67.6 | " | " | " | 88.3 | 0.30 |
| 30 | n-PAA·HCl/n-PDAA·HCl ( " ) | 69.7 | " | " | " | 80.8 | 0.29 |
| 31 | n-BAA·HCl/n-BDAA·HCl ( " ) | 71.5 | " | " | " | 77.6 | 0.28 |

Examples 32-35

In the copolymerization of N-ethylallylamine hydrochloride (EAA·HCl) and allylamine hydrochloride (AA·HCl) in Example 1, the polymerization initiator 2,2'-azobis(2-amidinopropane) dihydrochloride was replaced with 2,2'-azobis(2-(N-phenylamidino)propane) dihydrochloride (hereinafter referred to as initiator 2), 2,2'-azobis-(2-(imidazolynyl)propane) dihydrochloride (initiator 3), 2,2'-azobis(2-(N-hydroxyethyl)amidinopropane) dihydrochloride (initiator 4), 2,2'-azibis(2-(N-dimethylamino-propylamidino)propane) tetrahydrochloride (initiator 5), 2,2'-azobis(2-methylpropionehydroxamic acid) (initiator 6), 2,2'-azobis(2-carboxyethylpropionehydroxamic acid) (initiator 7), and 2,2'-azobis(2-methylpropaneamidoxime) (initiator 8) and the copolymerization was conducted under the same conditions as in Example 1. The polymerization conditions and the results are shown in Table 5.

Table 5

| Example No. | Initiator | Polymerization temp. | Polymerization time | Conversion | Intrinsic viscosity |
|---|---|---|---|---|---|
| 32 | Initiator 2 | 60°C | 48 hours | 87.2 | 0.19 |
| 33 | " 3 | " | " | 85.8 | 0.18 |
| 34 | " 4 | " | " | 89.5 | 0.20 |
| 35 | " 5 | " | " | 85.2 | 0.18 |
| 36 | " 6 | " | " | 82.3 | 0.19 |
| 37 | " 7 | " | " | 78.6 | 0.21 |
| 38 | " 8 | " | " | 79.2 | 0.17 |

Examples 39-45

In the copolymerization of N-isopropylallylamine hydrochloride (i-PAA·HCl) and diallylamine hydrochloride (DAA·HCl) in Example 10, the polymerization initiator 2,2'-azobis(2-amidinopropane) dihydrochloride was replaced with initiators 2, 3, 4, 5, 6, 7 and 8 used in Examples 32-38 respectively and the copolymerization operations were carried out under the same conditions as in Example 10. The polymerization conditions and the results are shown in Table 6.

0196588

Table 6

| Example No. | Initiator | Polymerization temp. | Polymeriza tion time | Conversion | Intrinsic viscosity |
|---|---|---|---|---|---|
| 39 | Initiator 2, 0.809 g | 60°C | 48 hours | 95.5 | 0.32 |
| 40 | " 3, " | " | " | 96.6 | 0.30 |
| 41 | " 4, " | " | " | 97.2 | 0.35 |
| 42 | " 5, " | " | " | 94.3 | 0.33 |
| 43 | " 6, " | " | " | 90.0 | 0.31 |
| 44 | " 7, " | " | " | 86.8 | 0.30 |
| 45 | " 8, " | " | " | 80.4 | 0.30 |

Examples 46-52

In the copolymerization of N-sec-butylallylamine hydrochloride (s-BAA·HCl) and dimethyldiallylammonium chloride (DMDAAmCl) in Example 19, the polymerization initiator 2,2'-azobis(2-amidinopropane) dihydrochloride was replaced with initiators 2, 3, 4, 5, 6, 7 and 8 and the copolymerization operations were carried out under the same conditions as in Example 10. The polymerization conditions and the results are shown in Table 7.

Table 7

| Example No. | Initiator | Polymeriza-tion temp. | Polymeriza-tion time | Conversion | Intrinsic viscosity |
|---|---|---|---|---|---|
| 46 | Initiator 2, 0.934 g | 60°C | 48 hours | 97.3 | 0.21 |
| 47 | " 3, " | " | " | 98.6 | 0.24 |
| 48 | " 4, " | " | " | 99.0 | 0.27 |
| 49 | " 5, " | " | " | 99.1 | 0.25 |
| 50 | " 6, " | " | " | 99.2 | 0.25 |
| 51 | " 7, " | " | " | 89.2 | 0.22 |
| 52 | " 8, " | " | " | 95.3 | 0.20 |

CLAIMS:

1. A process for preparing a copolymer of an N-substituted secondary monoallylamine or a salt thereof, which comprises compolymerizing a salt of an N-substituted secondary monoallylamine having the general formula:

$$CH_2=CH-CH_2-N^+H_2RX^- \qquad (I)$$

(wherein R represents a hydrocarbon group or substituted hydrocarbon group having 1-18 carbon atoms, and $X^-$ represents a monovalent anionic group) with a salt of monoallylamine having the general formula:

$$CH_2=CH-CH_2-N^+H_3X^- \qquad (II)$$

(wherein $X^-$ represents a monovalent anionic group) and/or a salt of diallylamine or its derivative having the general formula:

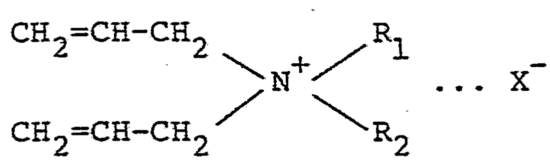

(III)

(wherein $R_1$ and $R_2$ each represents hydrogen or a hydrocarbon group or substituted hydrocarbon group having 1-18 carbon atoms, and $X^-$ represents a monovalent anionic group), in a polar solvent in the presence of a water-soluble radical initiator containing an azo group in the molecule.

2. A process according to claim 1 wherein the water soluble radical initiator is an azo compound of the general

0196588

formula:

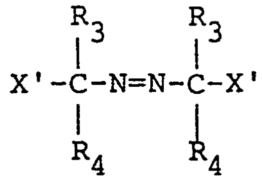 or

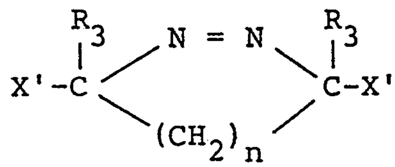

(wherein n is a number of 1 to 2; $R_3$ and $R_4$ may be the same or different groups and represent hydrogen or a hydrocarbon group or substituted hydrocarbon group having 1-10 carbon atoms, and they may form a ring; and X' represents 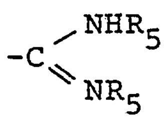 · HY (wherein $R_5$ represents hydrogen or a hydrocarbon group or substituted hydrocarbon group having 1-8 carbon atoms, and HY represents an inorganic acid or an organic acid), 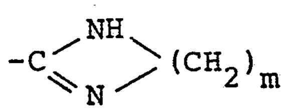 · HY (m = 2-3), 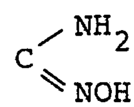, $CONHNH_2$ or 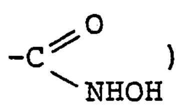).